# EUROPEAN PATENT SPECIFICATION

(11) **EP 3 689 292 B1**
(45) Date of publication and mention of the grant of the patent: **22.03.2023**
(21) Application number: 20152841.1
(22) Date of filing: 21.01.2020
(51) Int. Cl.: A61C 17/02

(54) **ORAL CAVITY WASHING DEVICE**
MUNDHÖHLENWASCHVORRICHTUNG
DISPOSITIF DE LAVAGE DE CAVITÉ BUCCALE

(30) Priority: 30.01.2019 JP 2019014573
(43) Date of publication of application: 05.08.2020
(73) Proprietor: Panasonic Intellectual Property Management Co., Ltd., Osaka-shi, Osaka 540-6207 (JP)
(72) Inventor: HOSHINO, Junichi, Osaka-shi, Osaka 540-6207 (JP)
(74) Representative: Grünecker Patent- und Rechtsanwälte PartG mbB

(56) References cited:
- WO-A1-2009/066684
- CN-U- 206 603 831
- FR-A1- 2 588 469

## Description

### 1. Technical Field

The present disclosure relates to an oral cavity washing device that washes an oral cavity.

### 2. Description of the Related Art

There exist conventional oral cavity washing devices that are used to get rid of food particles difficult to be removed by toothbrushes or other tools and that are used to massage gums. An oral cavity washing device disclosed in Unexamined Japanese Patent Publication No. JP 2005-349134 A includes a storage space to store a washing liquid, a pump to discharge the liquid stored in the storage space, and a tubular housing to house the storage space, the pump, and other parts. The storage space includes a bottomed tubular fluid supply tank having an opened upper end. The fluid supply tank is detachably attached to the housing. The upper end of the fluid supply tank is connected to and communicates with a tubular part disposed partly inside the housing, and thus the tubular part and the fluid supply tank constitute the storage space.

Further prior art is known from document WO 2009/066684 A1. This document discloses an oral washer comprising a storage battery, a finger electrode connected to one electrode of the battery and being in contact with a finger of the user during use, and an oral electrode connected to the other electrode of the battery and electrically connected via at least a liquid to the inside of the user's mouth during use. A circuit connecting one of the electrodes of the storage battery, the oral electrode, the liquid, the inside of the user's body, the finger electrode, and the other electrode of the storage battery is formed during use.

### SUMMARY

However, since the fluid supply tank is configured to be connected to the tubular part inside the housing of the conventional oral cavity washing device, sizes of openings in joints of the two parts are restricted. This makes it difficult to clean the storage space.

An object of the invention is to provides an oral cavity washing device that allows an inner surface of a storage space to be readily cleaned.

This object is solved by the subject matter of claim 1.

The oral cavity washing device provided according to the present disclosure allows a user to readily clean an inner surface of the storage space by removing the lid, which is disposed at one end of the tubular storage space and is designed to close the largest opening larger in area than the supply port.

### BRIEF DESCRIPTION OF THE DRAWINGS

FIG. 1 is a perspective view showing an oral cavity washing unit including an oral cavity washing device and a charging stand according to an exemplary embodiment;
FIG. 2 is a bottom perspective view of the oral cavity washing device according to the exemplary embodiment;
FIG. 3 is a cross-sectional side view schematically showing an internal structure of the oral cavity washing device according to the exemplary embodiment;
FIG. 4 is a top perspective view of the charging stand used for the oral cavity washing device according to the exemplary embodiment;
FIG. 5 is a bottom perspective view of the charging stand used for the oral cavity washing device according to the exemplary embodiment;
FIG. 6 is a cross-sectional view showing a terminal part of the oral cavity washing unit taken from line 6-6 of FIG. 1 in which the oral cavity washing device is attached to the charging stand according to the exemplary embodiment; and
FIG. 7 is a cross-sectional view showing the terminal part of the oral cavity washing unit taken from line 7-7 of FIG. 1 in which the oral cavity washing device is attached to the charging stand according to the exemplary embodiment.

### DETAILED DESCRIPTION

An oral cavity washing unit including an oral cavity washing device according to an exemplary embodiment of the present disclosure will now be described in detail with reference to the attached drawings. The exemplary embodiment described below is a preferred specific example of the present disclosure.

The drawings are schematic views, and are not always exactly illustrated. In the respective drawings, identical components are denoted by identical reference symbols.

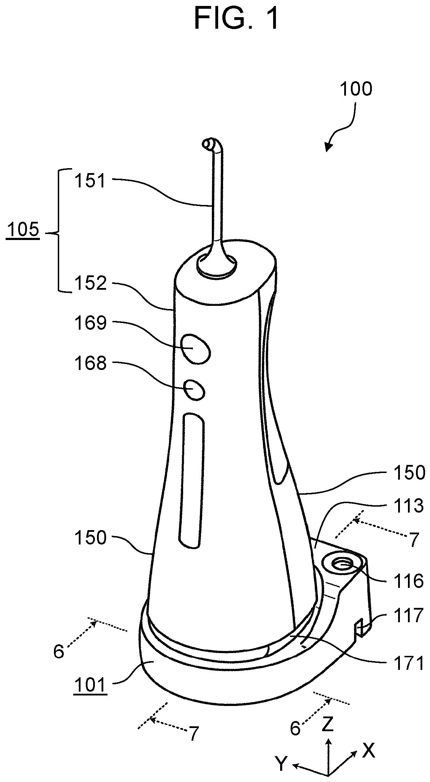

FIG. 1 is a perspective view showing an oral cavity washing unit including a charging stand and an oral cavity washing device according to the exemplary embodiment. As shown in the drawing, oral cavity washing unit 100 includes charging stand 101 and oral cavity washing device 105.

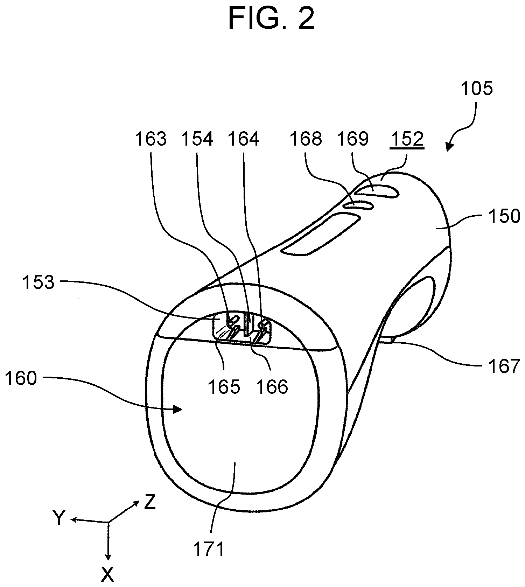

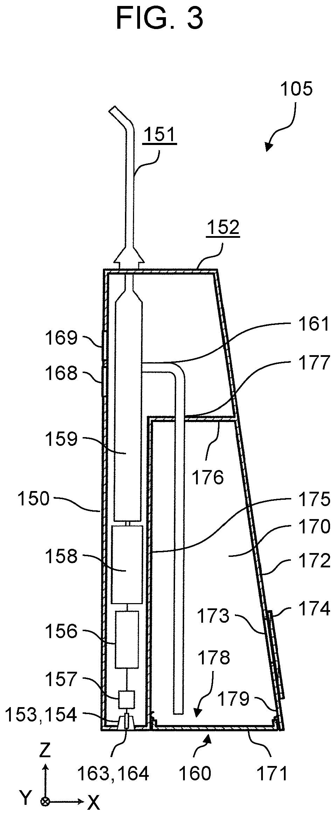

FIG. 2 is a bottom perspective view of the oral cavity washing device according to the exemplary embodiment. FIG. 3 is a cross-sectional side view schematically showing an internal structure of the oral cavity washing device according to the exemplary embodiment.

Oral cavity washing device 105 is a device that washes an oral cavity such as an interdental space and a gap between teeth and gums by discharging a liquid into the oral cavity. Oral cavity washing device 105 is a compact device that can be held with one hand of a person and includes nozzle 151 and device body 152.

Nozzle 151 includes a discharge port to discharge the liquid into the interdental space and is detachably attached to an upper end of device body 152. Nozzle 151 forms a passage through which the liquid such as water whose pressure has been increased by device body 152 is discharged in a predetermined direction. The liquid passage formed in nozzle 151 has a Venturi structure and lowers the pressure to a saturated vapor pressure by increasing a flow velocity of the liquid. Accordingly, part of the liquid changes into a gas, and thus bubbles are generated in the liquid. In addition, the passage gradually increases the pressure of the liquid and recovers the pressure of the liquid to a level higher than or equal to the saturated vapor pressure to change the bubbles into a liquid. During this transition, the bubbles burst and hence high shock waves are momentarily generated. These shock waves can be used for removal of dirt inside the oral cavity, particularly dirt in the interdental space.

Device body 152 is an apparatus that discharges a liquid through nozzle 151, and includes housing 150 having a substantially tubular overall shape that can be easily held with one hand of a person. Since housing 150 is caught in an edge of a palm of a hand that holds housing 150, a burden on an arm due to a weight of oral cavity washing device 105 can be reduced.

Housing 150 is a member that makes up an outer shell of device body 152 and includes lid 171, third cover 153 located so as to surround a periphery of third terminal 163, and fourth cover 154 located so as to surround a periphery of fourth terminal 164 at bottom 160. As shown in FIG. 3, housing 150 houses storage battery 156, power storage controller 157, driving source 158, and pump 159 and has storage space 170 that is located inside. The material which housing 150 is made of is not particularly limited and may be a resin, for example. Housing 150 may be formed by joining a plurality of members including storage space 170 and other parts together such that the members are stationary.

Storage battery 156 is a secondary battery that can store power by being supplied with power and can supply the stored power to driving source 158 and the like. A type of storage battery 156 is not particularly limited. The storage battery may be, for example, a lithium ion battery.

Power storage controller 157 is a circuit that monitors a power storage amount of storage battery 156 and can block supply of power to storage battery 156 when storage battery 156 is fully charged. Note that power storage controller 157 may not be included in oral cavity washing device 105.

Driving source 158 is an apparatus that generates driving force for driving pump 159. Driving source 158 is not particularly limited. The driving source may be, for example, an electric motor.

Pump 159 is a mechanism that pumps up a liquid in storage space 170 through tube 161, increases the pressure of the pumped liquid to a predetermined pressure, and then discharges the liquid. Pump 159 is not particularly limited. The pump may include a piston that reciprocates by driving source 158 and be able to fulfill functions such as liquid pumping, pressure increasing, and liquid discharging in combination with a plurality of valves, for example.

A front of device body 152 is provided with power button 169 and adjustment button 168 for adjusting the pressure of the liquid discharged from nozzle 151. Power button 169 and adjustment button 168 are electrically connected to a controller that is not shown. The controller is, for example, a microcomputer and is situated in device body 152.

Storage space 170 that stores a liquid such as water is a part formed inside housing 150. In the present exemplary embodiment, as shown in FIG. 3, storage space 170 is a tubular container made up of lid 171, peripheral wall section 172 that constitutes a part of housing 150, division wall 175, and division top section 176. Both ends of the tubular container are closed with lid 171 and division top section 176. In an axial direction (a Z-axis direction in the drawing), an area of lid 171 disposed at one of the ends of storage space 170 is larger than an area of division top section 176 disposed at the other end. An inner peripheral surface of storage space 170 is formed into a conical shape such that a cross-sectional area orthogonal to the axial direction gradually decreases with an advancement in the axial direction from lid 171 to division top section 176.

Peripheral wall section 172 constitutes at least part of a peripheral wall of tubular storage space 170 and serves as a part of housing 150 that forms the outer shell of device body 152. Peripheral wall section 172 has supply port 173 that is formed to supply a liquid from outside housing 150 into storage space 170. Supply lid 174 is attached to peripheral wall section 172 to shut supply port 173 from the outside and enable supply port 173 to be freely opened or closed.

In housing 150, division wall 175 and division top section 176 divide a space for housing pump 159, driving source 158, and other parts from a space for storing the liquid. In the present exemplary embodiment, division top section 176 has discharge vent 177 that tube 161 goes through and that is formed to pump up the stored liquid. Discharge vent 177 and an outer peripheral surface of tube 161 are connected to each other fluid-tight so as to prevent the liquid from leaking. Discharge vent 177 is not necessarily a vent that is formed in division top section 176 and that tube 161 goes through. Discharge vent 177 may be a vent located in a lower part of division wall 175.

Lid 171 is disposed at one of the ends of storage space 170. Lid 171 is able to entirely open and close largest opening 178 that is larger than supply port 173 and discharge vent 177 and that intersects with the axial direction of storage space 170. In the present exemplary embodiment, lid 171 occupies two thirds or more of or preferably three fourths or more of an area of bottom 160 of housing 150 that comes into contact with charging stand 101 when device body 152 is placed on charging stand 101. The area of bottom 160 of housing 150 is identical to a largest area of housing 150 in plan view. The largest opening communicating with storage space 170 occupies two thirds or more of or preferably three fourths or more of the area of bottom 160.

Lid 171 is integrated with packing 179 that comes into contact with storage space 170 to seal the stored liquid. Packing 179 is integrated with lid 171 in this way to help improve fluid-tight sealing performance of storage space 170. Further, packing 179 is integrated with lid 171 to prevent leakage of the liquid that can otherwise occur if lid 171 is put on the storage space without packing 179 or with packing 179 being not attached to a predetermined position.

A method of integrating lid 171 with packing 179 is not particularly limited. The method of integration may be, for example, insert molding.

A user who uses oral cavity washing unit 100 described above removes supply lid 174, which is smaller and easier to open and close than lid 171, to supply a liquid such as water into storage space 170. Then, the user can hold device body 152 to which nozzle 151 is attached, dispose a tip of nozzle 151 to near his/her interdental space, and operate power button 169 to clean his/her oral cavity by discharging the liquid into the oral cavity including the interdental space.

By removing lid 171 from device body 152, the user can see an entire inner surface of storage space 170 through bottom 160 of device body 152. This enables the user to readily check presence of scale or sludge inside storage space 170 and readily clean overall storage space 170. Thus, oral cavity washing device 105 described above is allowed to be kept clean over a long period of time.

Water can be supplied into storage space 170 through bottom 160 from which lid 171 is removed. In this case, a wide area of the opening in bottom 160 produces an effect of the facilitation of water supply. As compared with conventional examples, the oral cavity washing device obviates the trouble of attaching and detaching a storage tank and thus facilitates water supply work. Storage space 170 is formed by housing 150 only. This allows the oral cavity washing device to omit a complicated structure necessary for a detachable tank and have an increased storage capacity accordingly. The oral cavity washing device can also have an increased storage capacity using a dead space inside housing 150.

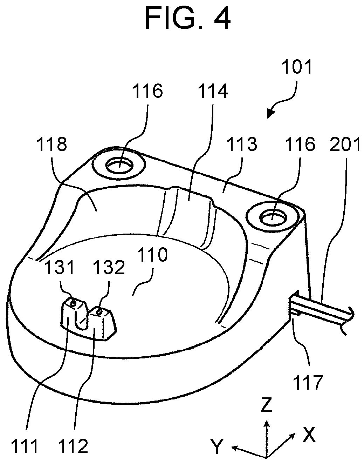

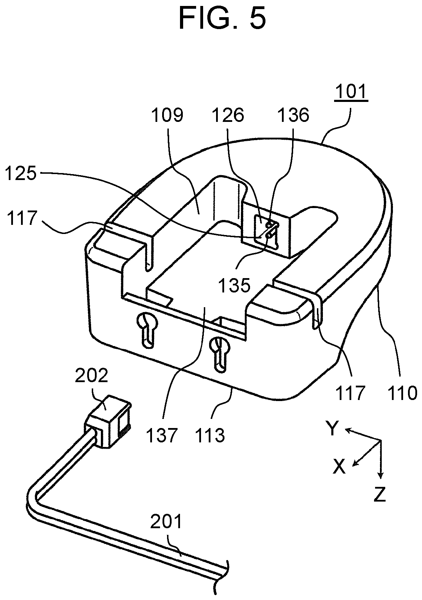

FIG. 4 is a top perspective view showing the charging stand according to the exemplary embodiment. FIG. 5 is a bottom perspective view showing the charging stand according to the exemplary embodiment. As shown in FIG. 1, charging stand 101 is an apparatus that holds oral cavity washing device 105 so as to be electrically connected to oral cavity washing device 105 and supply power to the storage battery included in oral cavity washing device 105. Charging stand 101 includes a function that relays power supplied by power supply cable 201 to oral cavity washing device 105 through a connection with power supply plug 202 (see FIG. 5). Charging stand 101 further includes a function to hold oral cavity washing device 105. In the present exemplary embodiment, charging stand 101 holds oral cavity washing device 105 such that the oral cavity washing device is placed on holding surface 110 of charging stand 101. Charging stand 101 has first cover 111 and second cover 112 that are formed into protrusions on holding surface 110 and fifth cover 125 and sixth cover 126 that are formed into recesses in a bottom of the charging stand. Charging stand 101 also includes guide 113 and rotation regulating portion 114. In the present exemplary embodiment, charging stand 101 has nozzle holders 116 in two respective places to hold nozzle 151, which is detachably attached to oral cavity washing device 105, and cable opening 117 through which power supply cable 201 is allowed to pass.

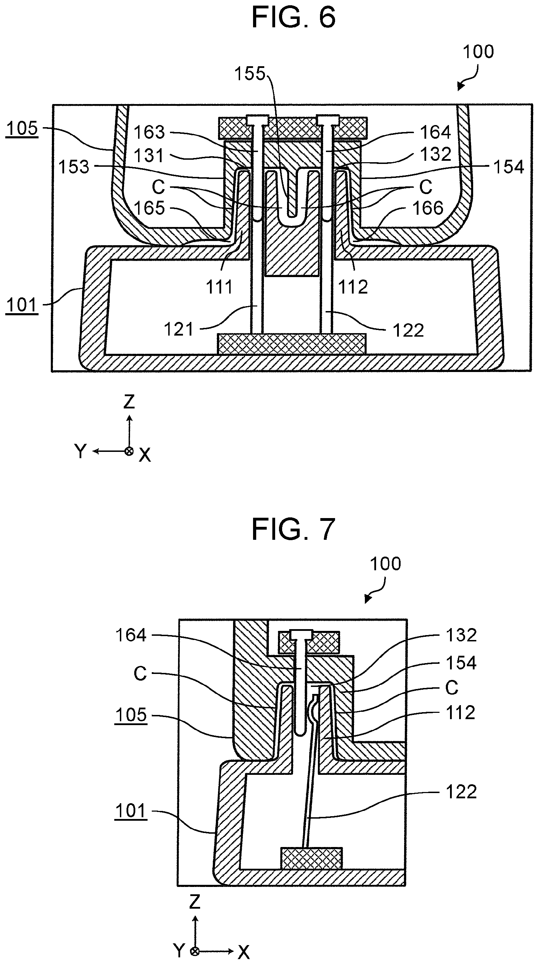

First cover 111 includes first opening 131 designed for insertion of third terminal 163 (see FIGS. 2 and 6), a connection terminal included in oral cavity washing device 105. The fist cover is formed into a tubular shape so as to house at least a part of first terminal 121 (see FIG. 6) configured to be electrically connected to third terminal 163. Second cover 112 includes second opening 132 designed for insertion of fourth terminal 164 (see FIGS. 2 and 6), a connection terminal included in oral cavity washing device 105. The second cover is formed into a tubular shape so as to house at least a part of second terminal 122 (see FIGS. 6 and 7) configured to be electrically connected to fourth terminal 164. Fifth cover 125 is fitted onto a part of power supply plug 202 and is formed into a tubular shape so as to house at least a part of fifth terminal 135. Sixth cover 126 is fitted onto a part of power supply plug 202 and is formed into a tubular shape so as to house at least a part of sixth terminal 136. Note that, as shown in FIG. 5, the tubular shape includes a shape in which a part of a peripheral wall is cut away. Details of first cover 111, second cover 112, fifth cover 125, sixth cover 126, first terminal 121, second terminal 122, fifth terminal 135, and sixth terminal 136 will be described later.

Guide 113 holds oral cavity washing device 105 in a predetermined position on charging stand 101. Guide 113 is not particularly limited to a specific shape. The guide may have any shape as long as the shape guides a move of oral cavity washing device 105 to holding surface 110 of charging stand 101 when oral cavity washing device 105 is held on holding surface 110 of charging stand 101. In the present exemplary embodiment, guide 113 is located so as to protrude upward from holding surface 110 of charging stand 101. Guide 113 includes wall surface 118 that is curved to suit a part of an outer peripheral shape of a bottom of oral cavity washing device 105.

Rotation regulating portion 114 located in guide 113 regulates displacement of oral cavity washing device 105 with respect to charging stand 101 in a rotation direction when oral cavity washing device 105 is going to be attached or has been attached to charging stand 101. Here, the rotation direction of oral cavity washing device 105 with respect to charging stand 101 is a direction whose axis of rotation is a direction of attaching oral cavity washing device 105 to charging stand 101 (the Z-axis direction in the drawing). In the present exemplary embodiment, rotation regulating portion 114 is formed into the shape of a groove extending in the Z-axis direction in the drawing and being recessed from wall surface 118 in an X-axis direction orthogonal to the Z-axis direction. The bottom of oral cavity washing device 105 is provided with a rotation regulated portion (not shown) protruding in a radial direction. The rotation regulated portion is fitted into the rotation regulating portion.

A material that charging stand 101 is made of and a method of manufacturing charging stand 101 are not particularly limited. In the present exemplary embodiment, charging stand 101 is a resin mold formed so as to have a predetermined thickness.

According to charging stand 101 described above, when oral cavity washing device 105 is placed on charging stand 101, the rotation regulated portion of oral cavity washing device 105 is fitted into rotation regulating portion 114, and oral cavity washing device 105 is placed on holding surface 110 while the bottom of oral cavity washing device 105 is disposed along wall surface 118. In the manner described above, first cover 111 and second cover 112 located on charging stand 101 can be readily inserted into third cover 153 and fourth cover 154 located in the bottom of oral cavity washing device 105. Oral cavity washing device 105 that is placed on holding surface 110 is arranged in proper position on holding surface 110. Thus, positional relationships of first cover 111 and second cover 112 with third cover 153 and fourth cover 154, respectively, are determined.

FIG. 6 is a cross-sectional view showing a terminal part of oral cavity washing unit 100 taken from line 6-6 of FIG. 1 in which oral cavity washing device 105 is attached to charging stand 101. FIG. 7 is a cross-sectional view showing the terminal part of oral cavity washing unit 100 taken from line 7-7 of FIG. 1 in which oral cavity washing device 105 is attached to charging stand 101. In the present exemplary embodiment, charging stand 101 includes first terminal 121, second terminal 122, first cover 111, and second cover 112. Oral cavity washing device 105 includes third terminal 163, fourth terminal 164, third cover 153, and fourth cover 154.

First terminal 121 is electrically connected to third terminal 163, and second terminal 122 is electrically connected to fourth terminal 164. First terminal 121 and second terminal 122 are connection terminals that supply power transmitted through power supply cable 201 to oral cavity washing device 105. In the present exemplary embodiment, the power supplied through power supply cable 201 is a direct-current voltage suitable to charge storage battery 156, and first terminal 121 and second terminal 122 each are electrically connected to power supply cable 201.

First terminal 121 is electrically connected to third terminal 163 with a unidirectional biasing force only, and second terminal 122 is electrically connected to fourth terminal 164 with a unidirectional biasing force only. A generation source of the biasing force is not particularly limited. For example, the charging stand may include a biasing member such as rubber or a spring that biases first terminal 121 and second terminal 122 separately or together. In the present exemplary embodiment, first terminal 121 and second terminal 122 are made of a material having an elastic force such as spring steel. The elastic force of first terminal 121 enables first terminal 121 to connect to third terminal 163, and the elastic force of second terminal 122 enables second terminal 122 to connect to fourth terminal 164.

In the present exemplary embodiment, an axis of a biasing direction of first terminal 121 is parallel to an axis of a biasing direction of second terminal 122. Specifically, the axis of the biasing direction of first terminal 121 and the axis of the biasing direction of second terminal 122 are parallel to an axis of a direction extending from an end of charging stand 101 where guide 113 is located toward an end opposite to guide 113 (an X-axis in the drawing).

A shape of first terminal 121 and a shape of second terminal 122 are identical, and same parts can be used for first terminal 121 and second terminal 122.

In the present exemplary embodiment, first cover 111 and second cover 112 each protrude from holding surface 110 toward oral cavity washing device 105 that is held. First cover 111 and second cover 112 are disposed side by side in a direction orthogonal to the biasing direction of first terminal 121 and second terminal 122. An outer shape of first cover 111 and an outer shape of second cover 112 each are a quadrangular pyramid that tapers from holding surface 110 toward a protruding direction (toward a positive side in the Z-axis direction in the drawing). Parts of first cover 111 and second cover 112 adjacent to holding surface 110, i.e., a foot of first cover 111 and a foot of second cover 112, are joined together. First cover 111 and second cover 112 form a shape of an output plug.

As described above, first cover 111 and second cover 112 each has a shape protruding upward from holding surface 110. Therefore, even if a liquid such as water is attached to any of the vicinities of first cover 111 and second cover 112 or even if lid 171 inadequately sealing largest opening 178 of oral cavity washing device 105 results in leakage of the liquid, the liquid can be readily discharged without remaining. Since the foot of first cover 111 and the foot of second cover 112 are joined together, a liquid attached to first cover 111 and second cover 112 can be early discharged. This prevents the liquid from causing a short circuit between first terminal 121 and second terminal 122, between first terminal 121 and fourth terminal 164, or between second terminal 122 and third terminal 163.

In the present exemplary embodiment, the shape of each of first opening 131 and second opening 132 located in a top surface of first cover 111 and a top surface of second cover 112, respectively, is not a perfect circle. Two adjacent sides of each of a bounding rectangle of first opening 131 and a bounding rectangle of second opening 132 are different in length. Here, the bounding rectangle refers to a smallest rectangle that can surround a contour. Specifically, the shape of each of first opening 131 and second opening 132 is an oval shape including an oblong shape and an elliptical shape. First opening 131 and second opening 132 each formed into an oval shape are disposed such that longitudinal directions of first opening 131 and second opening 132 are parallel to the biasing direction of first terminal 121 and second terminal 122.

While oral cavity washing device 105 is held in the predetermined position on charging stand 101, sizes of first opening 131 and second opening 132 in charging stand 101 are such that a gap exists both between the first opening and inserted third terminal 163 and between the second opening and inserted fourth terminal 164. Note that if the position in which oral cavity washing device 105 is held with respect to charging stand 101 is displaced from the predetermined position, at least one of a pair of first opening 131 and third terminal 163 and a pair of second opening 132 and fourth terminal 164 may come into contact with each other.

Third terminal 163 is a connection terminal that is detachably and electrically connected to first terminal 121. Fourth terminal 164 is a connection terminal that is detachably and electrically connected to second terminal 122. In the present exemplary embodiment, third terminal 163 and fourth terminal 164 are connected to storage battery 156 through power storage controller 157, and supply power relayed by charging stand 101 to storage battery 156.

Third terminal 163 and fourth terminal 164 each are a rod-shaped member having rigidity that can maintain the shape against the biasing force of each of first terminal 121 and second terminal 122. In the present exemplary embodiment, third terminal 163 and fourth terminal 164 each are a round rod.

Third cover 153 includes third opening 165 designed for insertion of first cover 111 and is formed into a tubular shape so as to house at least a part of third terminal 163. Fourth cover 154 includes fourth opening 166 designed for insertion of second cover 112 and is formed into a tubular shape so as to house at least a part of fourth terminal 164.

In the present exemplary embodiment, third cover 153 and fourth cover 154 are recessed inward from the bottom of oral cavity washing device 105. When oral cavity washing device 105 is placed in the predetermined position on charging stand 101, third cover 153 and fourth cover 154 are disposed side by side in the direction orthogonal to the biasing direction of first terminal 121 and second terminal 122. An inner shape of third cover 153 and an inner shape of fourth cover 154 correspond to the outer shape of first cover 111 and the outer shape of second cover 112, respectively, and each are a quadrangular pyramid that tapers inward from the bottom (toward the positive side in the Z-axis direction in the drawing). Wall surfaces of third cover 153 and fourth cover 154 are partially shared, and shared wall surface portion 155 separates third terminal 163 from fourth terminal 164.

In the present exemplary embodiment, third terminal 163 and fourth terminal 164 are attached to ceiling surfaces of third cover 153 and fourth cover 154, respectively, in a protruded manner.

While oral cavity washing device 105 is placed in the predetermined position on charging stand 101, positional relationships of the outer shape of first cover 111 and the outer shape of second cover 112 with the inner shape of third cover 153 and the inner shape of fourth cover 154, respectively, are as described below. Specifically, in a radial direction orthogonal to an insertion direction of first cover 111, an entire periphery of third cover 153 is not in contact with an entire periphery of first cover 111, and in a radial direction orthogonal to an insertion direction of second cover 112, an entire periphery of fourth cover 154 is not in contact with an entire periphery of second cover 112. In other words, while oral cavity washing device 105 is placed in the predetermined position on charging stand 101, gap C exists both between first cover 111 and third cover 153 and between second cover 112 and fourth cover 154. Hence, when oral cavity washing device 105 is placed in the predetermined position on charging stand 101, a pair of first cover 111 and third cover 153 and a pair of second cover 112 and fourth cover 154 each do not come into pressure contact with or into contact with each other.

Note that if the position in which oral cavity washing device 105 is placed with respect to charging stand 101 is displaced from the predetermined position, at least one of the pair of first cover 111 and third cover 153 and the pair of second cover 112 and fourth cover 154 may come into contact with each other.

According to the configuration described above, when oral cavity washing device 105 is attached to or detached from charging stand 101, in particular, when oral cavity washing device 105 is removed from charging stand 101, first cover 111 and third cover 153, and second cover 112 and fourth cover 154 do not rub against each other. Therefore, even if charging stand 101 is placed on a washstand or the like without being fixed, the user can remove oral cavity washing device 105 from charging stand 101 without holding down charging stand 101 with a hand or the like. As a result, oral cavity washing device 105 can be easily removed from charging stand 101 while being held by a hand, and oral cavity washing device 105 can be easily used. After a use of oral cavity washing device 105, oral cavity washing device 105 can be easily attached to charging stand 101 to start charging of oral cavity washing device 105.

Fifth terminal 135 is a terminal that is attached to a position different from the positions of first terminal 121 and second terminal 122 in charging stand 101 and is electrically connected to first terminal 121 via a lead wire laid inside charging stand 101. Sixth terminal 136 is a terminal that is disposed adjacent to and side by side with fifth terminal 135 and is electrically connected to second terminal 122 via a lead wire laid inside charging stand 101. Fifth terminal 135 and sixth terminal 136 are not limited to a particular shape. In the present exemplary embodiment, fifth terminal 135 and sixth terminal 136 each are a round rod similar to third terminal 163 and fourth terminal 164. Extending directions of axes of fifth terminal 135 and sixth terminal 136 are parallel to the axis of the biasing direction (the X-axis in the drawing) of first terminal 121 and second terminal 122. A direction in which fifth terminal 135 and sixth terminal 136 protrude extends from the end opposite to guide 113 toward the end where guide 113 is located (toward a positive side in the X-axis in the drawing). Positions to which fifth terminal 135 and sixth terminal 136 are attached are not specifically limited. In the present exemplary embodiment, the positions are in a side wall of recess 109 that is formed in a surface opposite to holding surface 110 for holding oral cavity washing device 105 and that is recessed toward holding surface 110. Fifth terminal 135 and sixth terminal 136 are disposed side by side in an axis direction extending from holding surface 110 of charging stand 101 toward a surface on an opposite side (the Z-axis in the drawing).

Fifth cover 125 is a portion having a tubular shape that houses at least a part of fifth terminal 135. Sixth cover 126 is a portion having a tubular shape that houses at least a part of sixth terminal 136. Fifth cover 125 and sixth cover 126 form a shape of an input plug connectable to power supply plug 202. The shape formed by fifth cover 125 and sixth cover 126 is different from the shape of the output plug formed by first cover 111 and second cover 112. In the present exemplary embodiment, the shape of the recessed input plug formed by fifth cover 125 and sixth cover 126 is different from the shape of the protruding output plug formed by first cover 111 and second cover 112. Further, in the present exemplary embodiment, a spacing between an axis of the outer quadrangular shape of first cover 111 and an axis of the outer quadrangular shape of second cover 112 is set to be larger than a spacing between an axis of the inner quadrangular shape of fifth cover 125 and an axis of the inner quadrangular shape of sixth cover 126. This prevents power supply plug 202 designed to be connected to fifth cover 125 and sixth cover 126 from being connected by mistake to third cover 153 and fourth cover 154 that are designed to be connected to first cover 111 and second cover 112.

According to the configuration described above, shapes of first cover 111 and third cover 153, and shapes of second cover 112 and fourth cover 154 have a relationship in which gap C is formed such that the user can remove oral cavity washing device 105 from charging stand 101 with one hand without holding down charging stand 101 with a hand or the like. On the other hand, shapes of fifth cover 125 and sixth cover 126 can have a relationship so as to be firmly connected to power supply plug 202 provided at a tip end of power supply cable 201.

In the present exemplary embodiment, peripheral walls of fifth cover 125 and sixth cover 126 are partly cut away such that the two covers communicate. Although the covers are shaped like one tube in an overall view, fifth cover 125 and sixth cover 126 are assumed to be individual tubular covers.

Fifth cover 125 and sixth cover 126 are formed such that fifth cover 125 and sixth cover 126 open facing an inside of recess 109 recessed toward holding surface 110 from the surface opposite to holding surface 110. In this way, fifth cover 125, sixth cover 126, fifth terminal 135, and sixth terminal 136 are disposed in recess 109. This configuration, even if a liquid such as water is spilled on charging stand 101 from above, can prevent an entry of the liquid into fifth cover 125 and sixth cover 126 to which power supply plug 202 is connected.

Charging stand 101 includes side surface opening 137 formed in a part of the side wall of recess 109, and openings of fifth cover 125 and sixth cover 126 are disposed in the side wall of recess 109 so as to face side surface opening 137. Therefore, along an axis of a direction in which power supply plug 202 is inserted into fifth cover 125 and sixth cover 126, fifth cover 125, sixth cover 126, and side surface opening 137 are aligned on a straight line. As a result, even if recess 109 is small, power supply plug 202 can be reliably attached to or detached from fifth cover 125 and sixth cover 126 by hand. This configuration enables power supply plug 202 to be reliably attached to charging stand 101 by hand even if a structure in which a high frictional force is generated between power supply plug 202 and fifth cover 125 and sixth cover 126 is adopted. This configuration can prevent power supply plug 202 from unintentionally coming off charging stand 101. Depending on a site where charging stand 101 is placed, side surface opening 137 may be blocked, and this prevents power supply cable 201 from being passed through side surface opening 137. In this case, power supply cable 201 can be passed through any of cable openings 117 formed in two locations to insert power supply plug 202 into fifth cover 125 and sixth cover 126.

Fifth cover 125 and sixth cover 126 are disposed so as to be vertically aligned when charging stand 101 is placed on a washstand or the like. As a result, even if a liquid such as water enters fifth cover 125 and sixth cover 126, the liquid can be prevented from being attached, in a crosslinked manner, to fifth terminal 135 and sixth terminal 136 that are housed in fifth cover 125 and sixth cover 126, respectively. Thus, even if fifth cover 125 and sixth cover 126 vertically communicate, fifth terminal 135 and sixth terminal 136 can be prevented from corroding due to electrolysis.

According to charging stand 101 according to the exemplary embodiment described above, fifth cover 125 and sixth cover 126 can suit a shape of general-purpose power supply plug 202. At the same time, a shape of each of first cover 111 and second cover 112 that are connected to oral cavity washing device 105 can be set for each type of oral cavity washing device 105 through, for example, being formed into a shape suitable for drainage. As a result, an effect suitable for the type of oral cavity washing device 105 can be achieved such as prevention of corrosion caused by electrolysis to first terminal 121 and second terminal 122 disposed on holding surface 110 of charging stand 101.

Since recess 109 is formed at a side opposite to holding surface 110 of charging stand 101, and fifth cover 125 and sixth cover 126 are disposed so as to face recess 109, power supply plug 202 can be housed inside charging stand 101. As a result, a joint between the covers and power supply plug 202 can be concealed under charging stand 101, and entering of a liquid into fifth cover 125 and sixth cover 126 can be suppressed. Moreover, charging stand 101 as a whole including connected power supply plug 202 can be downsized, and thus an installation area of oral cavity washing unit 100 can be reduced.

The scope of the present disclosure should not be limited to the exemplary embodiment described above. For example, the present disclosure includes another exemplary embodiment implemented by arbitrarily combining constituents described herein or excluding some of the constituents. The scope of the present invention is esdefined by the appended claims.

In the description given above, storage space 170 includes division top section 176, for example. However, storage space 170 may not have division top section 176 facing lid 171 and may be formed into a conical shape such as a cone or a pyramid with a pointed top end.

In the description given above, a part of bottom 160 of housing 150 is lid 171 of storage space 170. However, entire bottom 160 of housing 150 may function as lid 171.

The cross-sectional area of storage space 170 changes seamlessly along the axial direction. The cross-sectional area may, however, change in stages.

Charging stand 101 not only relays power, but may include an electronic part such as a voltage lowering circuit and a direct current conversion circuit.

In the exemplary embodiment described above, an example of the shape of each of first cover 111, second cover 112, third cover 153, fourth cover 154, fifth cover 125, and sixth cover 126 is shown. However, each shape may be arbitrarily combined within a range in which first cover 111 and second cover 112 can be detachably connected to third cover 153 and fourth cover 154, respectively, and fifth cover 125 and sixth cover 126 can be detachably connected to power supply plug 202.

In the description given above, first terminal 121 and second terminal 122 are disposed in charging stand 101 and third terminal 163 and fourth terminal 164 are disposed in oral cavity washing device 105. However, first terminal 121 and fourth terminal 164 may be included in charging stand 101, and second terminal 122 and third terminal 163 may be included in oral cavity washing device 105.

Alternatively, the shape of each of first cover 111, second cover 112, third cover 153, fourth cover 154, fifth cover 125, and sixth cover 126 is not limited to a quadrangular pyramid, and an arbitrary shape such as a truncated cone can be applied.

The present disclosure can be applied to various oral cavity washing devices used in households, medical institutions, and other environments equivalent to these places.

## Claims

1. An oral cavity washing device (105) that washes an oral cavity with a liquid, the oral cavity washing device (105) comprising:
a housing (150);
a storage space (170) having a tubular shape and being located in the housing (150), the storage space (170) being configured to store the liquid; and
a pump (159) housed in the housing (150) to discharge the liquid stored in the storage space (170),
wherein the housing (150) includes:
a peripheral wall section (172) constituting at least part of a peripheral wall of the storage space (170) and having a supply port (173) for supplying the liquid from outside the housing (150) into the storage space (170); and
a lid (171) disposed at one end of the storage space (170) to be able to entirely open and close a largest opening (178) that is larger in area than any other opening in the housing (150),
**characterized in that**
an inner peripheral surface of the storage space (170) is formed into a conical shape such that a cross-sectional area orthogonal to the axial direction thereof gradually decreases with an advancement in the axial direction from the lid (171) to a division top section (176) positioned at the other end of the storage space (170).

2. The oral cavity washing device (105) according to claim 1, wherein
the housing (150) has a bottom (160),
an area of the bottom (160) is identical to a largest area of the housing (150) in plan view, and
the largest opening (178) communicating with the storage space (170) accounts for two thirds or more of the bottom (160).

## Patentansprüche

1. Eine Mundhöhlenwaschvorrichtung (105), die eine Mundhöhle mit einer Flüssigkeit wäscht, die Mundhöhlenwaschvorrichtung (105) weist auf:
ein Gehäuse (150),
einen Speicherraum (170) mit einer rohrförmigen Gestalt, der in dem Gehäuse (150) lokalisiert ist, der Speicherraum (170) ist konfiguriert, um darin die Flüssigkeit zu speichern, und
eine Pumpe (159), die in dem Gehäuse (150) untergebracht ist um die Flüssigkeit, die in dem Speicherraum (170) gespeichert ist, auszugeben,
wobei das Gehäuse (150) beinhaltet:
einen peripheren Wandabschnitt (172) konstituiert um zumindest einen Teil einer peripheren Wand des Speicherraums (170) zu bilden und aufweisend eine Zuführöffnung (173) zum Zuführen der Flüssigkeit von außerhalb des Gehäuses (150) in den Speicherraum (170), und
einen Deckel (171), der an einem Ende des Speicherraums (170) vorgesehen ist und in der Lage ist, eine größte Öffnung (178) ganz zu öffnen zu schließen, die größer in der Fläche ist als jede andere Öffnung in dem Gehäuse (150),
**dadurch gekennzeichnet, dass**
eine innere periphere Oberfläche des Speicherraums (170) in einer konischen Gestalt so geformt ist, dass ein Querschnitt rechtwinklig zu der Axialrichtung davon allmählich verringert ist mit einem Fortschreiten in der Axialrichtung von dem Deckel (171) zu einer oberen Teilungssektion (176), die an dem anderen Ende des Speicherraums (170) positioniert ist.

2. Die Mundhöhlenwaschvorrichtung (105) gemäß Anspruch 1, wobei das Gehäuse (150) einen Boden (160) hat, eine Fläche des Bodens (160) identisch mit einer größten Fläche des Gehäuses (150) in Draufsicht ist, und die größte Öffnung (178) die mit dem Speicherraum (170) kommuniziert, zwei Drittel oder mehr des Bodens (160) beansprucht.

## Revendications

1. Dispositif de lavage de la cavité buccale (105) qui lave une cavité buccale avec un liquide, le dispositif de lavage de la cavité buccale (105) comprenant :
un logement (150) ;
un espace de stockage (170) ayant une forme tubulaire et étant localisé dans le logement (150), l'espace de stockage (170) étant conçu pour stocker le liquide ; et
une pompe (159) logée dans le logement (150) pour évacuer le liquide stocké dans l'espace de stockage (170),
le logement (150) comprenant :
une section de paroi périphérique (172) constituant au moins une partie d'une paroi périphérique de l'espace de stockage (170) et ayant un orifice d'alimentation (173) pour alimenter le liquide depuis l'extérieur du logement (150) dans l'espace de stockage (170) ; et
un couvercle (171) disposé à une extrémité de l'espace de stockage (170) pour être capable d'ouvrir et de fermer entièrement une ouverture plus grande (178) qui est plus grande en surface que n'importe quelle autre ouverture dans le logement (150),
**caractérisé en ce qu'**une surface périphérique interne de l'espace de stockage (170) est formée selon une forme conique de sorte qu'une section transversale orthogonale à son sens axial baisse graduellement avec une progression dans le sens axial depuis le couvercle (171) jusqu'à une section supérieure de séparation (176) positionnée à l'autre extrémité de l'espace de stockage (170).

2. Dispositif de lavage de la cavité buccale (105) selon la revendication 1,
le logement (150) ayant un fond (160),
une surface du fond (160) étant identique à une surface plus grande du logement (150) selon une vue en plan, et
l'ouverture la plus grande (178) communiquant avec l'espace de stockage (170) comptant pour les deux tiers ou plus du fond (160).
